# EUROPÄISCHE PATENTANMELDUNG

(11) **EP 4 575 385 A1**
(43) Veröffentlichungstag der Anmeldung: **25.06.2025**
(21) Anmeldenummer: 24221396.5
(22) Anmeldetag: 19.12.2024
(51) Int. Cl.: G01B 7/06, G01V 3/08

(54) **VERFAHREN UND VORRICHTUNG ZUR DETEKTION EINES KANALANSCHLUSSES**

(30) Priorität: 19.12.2023 DE 102023135727
(71) Anmelder: corterest GmbH & Co. KG, 63791 Karlstein am Main (DE); Klug, Thomas, 63762 Grossostheim (DE)
(72) Erfinder: KLUG, Thomas, 63762 Grossostheim (DE)
(74) Vertreter: Stoffregen, Hans-Herbert

(57) **Zusammenfassung**

Die Erfindung betrifft ein Verfahren und eine Vorrichtung zur Detektion eines durch eine Innenauskleidung (18) verdeckten Kanalanschlusses (14) eines Kanalrohrs (10), wobei ein kapazitiver Sensor (28, 56, 70, 80, 86, 94) mittels einer Transportvorrichtung (22) im Innern des Kanalrohrs (10) entlang der Innenauskleidung (18) geführt wird, wobei der kapazitive Sensor (28, 56, 70, 80, 86, 94) zumindest eine Elektrode (30, 32, 58, 60, 72, 74,82, 84, 88, 90, 96, 98, 100) aufweist, von der ein elektrisches Feld (38) ausgeht, welches ausgelegt ist, zumindest die Innenauskleidung (18) und einen Abschnitt der Kanalwandung (12) zu durchsetzen, wobei das elektrische Feld (38) gemessen und zur Detektion der Öffnung (14) mit einer Auswerteeinheit (36) ausgewertet wird. Um die Positionierung des kapazitiven Sensors relativ zu der Kanalwand sowie die Signalauswertung zu vereinfachen, ist vorgesehen, dass die zumindest eine Elektrode (30, 32, 58, 60, 72, 74,82, 84, 88, 90, 96, 98, 100) des kapazitiven Sensors und/oder der kapazitive Sensor (28, 56, 70, 80, 86, 94) während der Messung mit Kraft gegen die Innenauskleidung (18) beaufschlagt und berührend entlang der Innenauskleidung (18) geführt wird.

## Beschreibung

Die Erfindung bezieht sich auf ein Verfahren zur Detektion eines durch eine Innenauskleidung verdeckten Kanalanschlusses eines Kanalrohrs, wobei ein kapazitiver Sensor mittels einer Transportvorrichtung im Innern des Kanalrohrs entlang der Innenauskleidung geführt wird, wobei der kapazitive Sensor zumindest eine Elektrode aufweist, von der ein elektrisches Feld ausgeht, welches ausgelegt ist, zumindest die Innenauskleidung und einen Abschnitt der Kanalwandung zu durchsetzen, wobei das elektrische Feld gemessen und zur Detektion des Kanalanschlusses mit einer Auswerteeinheit ausgewertet wird.

Ferner bezieht sich die Erfindung auf eine Vorrichtung zur Detektion eines durch eine Innenauskleidung verdeckten Kanalanschlusses eines Kanalrohrs, umfassend eine Transportvorrichtung mit zumindest einem kapazitiven Sensor, der mittels der Transporteinrichtung im Innern des Kanalrohrs entlang der Innenauskleidung geführt wird, wobei der kapazitive Sensor zumindest eine Elektrode aufweist, von der ein elektrisches Feld ausgeht, welches ausgelegt ist, zumindest die Innenauskleidung und einen Abschnitt der Kanalwandung zu durchsetzen, wobei die Vorrichtung eine Auswerteeinheit aufweist, die ausgebildet ist, das elektrische Feld zu messen und zur Detektion des Kanalanschlusses auszuwerten.

Die DE 196 27 312 C1 betrifft einen Kanal-Fräsroboter in Form einer länglichen Transporteinheit, die in Längsrichtung eines zu sanierenden Kanalrohrs verfahrbar ist. Die Transporteinheit umfasst eine Positioniereinheit in Form eines Roboterarms, an dem ein Werkzeughalter befestigt ist. Von dem Werkzeughalter geht eine Sensoranordnung aus, die einen kapazitiven Sensor sowie einen Ultraschallsensor umfasst.

Der kapazitive Sensor besteht aus drei Elektroden, die als Ringelektroden konzentrisch um den Ultraschallsensor angeordnet sind. Dabei sind zwei Elektroden über Leitungen mit einem Messverstärker verbunden, der eine Spannungsdifferenz misst und diese als Signal ausgibt. Wenn sich ein Dielektrikum im Bereich der Feldlinien des kapazitiven Sensors nicht ändert, gibt der Messverstärker das gleiche Differenzsignal aus. Kommt der kapazitive Sensor jedoch in den Bereich einer Öffnung, wie Hausanschluss, bei dem das Erdreich bzw. die Kanalwandung durch Luft oder Wasser ersetzt ist, so ändert sich in diesem Bereich das Dielektrikum und es wird zu einer Störung der Feldlinien kommen, die ein anderes Differenzsignal zur Folge hat, das vom Messverstärker erkannt und in einem Rechner verarbeitet wird. Auf diese Weise wird berührungslos festgestellt, ob hinter der Wandung des Kanalrohrs ein Hausanschluss oder Erdreich liegt.

Da das Signal, z. B. in Form einer Ausgangsspannung, sowohl von dem Dielektrikum des durchstrahlten Materials als auch von dem Abstand des kapazitiven Sensors zur Innenwand/zur Innenauskleidung des Kanalrohrs beeinflusst wird, muss sich der kapazitive Sensor während der Messung stets in konstantem Abstand zur Innenwandung/ zur Innenauskleidung des Kanalrohrs befinden, was dadurch erreicht wird, dass der Ultraschallsensor den Abstand misst und ihn über einen Stellmotor konstant hält.

Die DE 10 2007 010 980 A1, deren Inhalt vollumfänglich in vorliegende Anmeldung aufgenommen wird, betrifft einen kapazitiven Sensor mit zumindest drei Elektroden. Der Sensor weist einen Sensorkopf auf, der eine der Elektroden besitzt, die halbkugelförmig ausgebildet ist. Dadurch wird der aktive Sensorbereich auf einfache Weise bei ansonsten gleich großen Dimensionen wesentlich vergrößert und die Elektrode und damit der Sensorkopf kann insgesamt für den geforderten Sensorbereich wesentlich verkleinert werden. Des Weiteren wird vorgeschlagen, den kapazitiven Sensorkopf zusätzlich mit einem Gehäuse auszubilden, wobei im Bereich um die halbkugelförmig ausgebildete Elektrode herum dieses in zweckmäßigerweise ebenfalls halbkugelförmig ausgebildet ist.

Die DE 102 10 746 C1 betrifft ein Segment für einen Sensorträgerkörper für einen Molch. Das Segment umfasst mindestens zwei im Wesentlichen parallel hintereinander angeordnete Kufenpaare, wobei zwischen zumindest einem Kufenpaar eine Trägerplatte für Sensoren angeordnet ist. Zwischen benachbarten Segmenten eines solchen Sensorträgerkörpers können U-förmige Federplatten angebracht sein, um eine Vorspannung des Sensorträgerkörpers zu erzeugen, so dass die Kufen der Segmente an die Innenwand des Rohres, an dem der Sensorträgerkörper bewegt wird, angedrückt werden. Es werden Ultraschall- oder elektromagnetische Sensoren eingesetzt. Der Sensorträgerkörper hat dabei die Aufgabe, die Sensoren in einer bestimmten Position bzw. in einem bestimmten Abstand zu der Rohrinnenwand zu führen.

Die DE 103 09 263 C1 betrifft einen Geberträger für ein innerhalb von Rohren einsetzbares Inspektionsgerät. Die Vorrichtung ist zur Inspektion bzw. zur Untersuchung von Öl-, Gas-, Kondensat- und Ölproduktions-Rohrleitungen vorgesehen. Der Träger umfasst eine Menge von untereinander verbundenen ringförmigen Geberhaltern, wobei die Sitzstellen für die Geber in kinematisch untereinander verbundenen Elementen der ringförmigen Halter vorgesehen sind. Die Elemente der ringförmigen Halter sind befähigt, radial von einer Trägerachse weg elastisch angedrückt zu werden. Die Elektroden bzw. Sensoren werden folglich mit Abstand zu der Kanalwand geführt.

Die DE 10 2011 016 668 A1 betrifft ein Verfahren und eine Vorrichtung zur Prüfung eines Wandabschnitts und/oder Eckbereichs eines Hohlkörpers. Dabei wird eine Sensoranordnung zur Prüfung an einer Zwischenwand bzw. einem Eckbereich innerhalb des Hohlkörpers entlang bewegt. Ein solcher Sensor bzw. Ultraschallsensor wird mit dem zu prüfenden Material in Kontakt gebracht, d. h. der Sensor wird zur Prüfung eines Wandabschnitts an diesem entlanggeführt.

Die EP 0 654 631 A1 betrifft einen in einem Kanalrohr fahrbaren Messwagen mit einer Sensoranordnung, die über einen steuerbaren Arm an eine Innenwand eines Kanals anlegbar ist.

Die DE 36 26 646 A1 betrifft ein Gerät zum Messen und zur zerstörungsfreien Werkstoffprüfung an verlegten Rohrleitungen, in Form eines durch die Rohrleitung bewegten und an der Innenwandung der Rohrleitung geführten Molchs. Dieser weist wenigstens einen kreisförmigen Träger mit an dessen Umfang angeordneten Messsensoren und wenigstens ein druckfestes Gehäuse auf, das Einrichtungen für die Messwerteverarbeitung und -aufzeichnung sowie für die Stromversorgung aufnimmt. Um zu gewährleisten, dass die Sensoren in geringstmöglichem sowie stets gleichbleibendem Abstand und in gleichbleibender Winkellage zur Rohrwandung liegen, ist der Träger als zylindrische Manschette aus einem gummielastischen Werkstoff ausgebildet und mit einem in axial-, radial- in Umfangsrichtung regelmäßigen Profil versehen, dessen Erhebungen auf einer zylindrischen Hüllfläche mit einem gegen den Innendurchmesser der Rohrleitung etwas größeren Außendurchmesser anliegen und in dessen Senken die Sensoren auf einer zur Hüllfläche konzentrischen Fläche angeordnet sind. Folglich werden die Elektroden und/oder Sensoren nicht berührend entlang der Innenauskleidung geführt.

Die DE 40 17 238 A1 betrifft ein Verfahren und eine Vorrichtung zum Orten von Undichtigkeiten für nicht metallische unterirdische Rohrleitungen, insbesondere Beton-Rohrleitung, die insbesondere der Wasserver- oder Entsorgung dienen. Die Messung erfolgt mittels Georadar im Rohrinneren. An einem Fahrgestell ist über einen Verstellantrieb ein Haltemittel angebracht, an dem sich die in diesem Ausführungsbeispiel kombinierte Sende- und Empfangsantenne befindet.

Die DE 10 2013 211 795 A1 betrifft eine Detektorvorrichtung zum Erkennen von verborgenen Strukturen in Wandungen. Die Detektorvorrichtung umfasst zumindest eine als Senderantenne arbeitende Antenne, einen Oszillator, welcher ein elektrisches Signal erzeugt und elektrisch mit der Antenne verbunden ist sowie eine Auswerteeinrichtung, welche derart ausgebildet ist, dass sie das von der Antenne rückreflektierte elektrische Signal hinsichtlich Phase und/oder Betrag auswertet.

Die aus dem Stand der Technik bekannten Molche weisen eine Vielzahl von Sensoren auf, um große Flächen in kleinen Rastern abzudecken. Entsprechend sind Molche derart konzipiert, möglichst viele Sensoren effizient auf kleinem Raum unterzubringen. Das ist jedoch für die Erkennung von Zuläufen bzw. Anschlüssen im Kanal nachteilig, da sehr hohe Kosten durch die Anzahl der Sensoren und die Anordnung entstehen und keine flächige Abdeckung und Analyse erforderlich ist.

Der vorliegenden Erfindung liegt die Aufgabe zugrunde ein Verfahren und eine Vorrichtung der eingangs genannten Art derart weiterzubilden, dass die Positionierung des Sensors relativ zu der Kanalwandung sowie die Signalauswertung vereinfacht werden. Es soll eine kosteneffiziente Lösung bereitgestellt werden, die mit möglichst wenigen, idealerweise nur einem Sensor auskommt und dieser optimal im Kanalrohr geführt wird.

Die Aufgabe wird gemäß der Erfindung mit den Merkmalen des Anspruchs 1 gelöst.

Gemäß der Erfindung ist vorgesehen, dass die zumindest eine Elektrode des kapazitiven Sensors und/oder der kapazitive Sensor während der Messung mit Kraft gegen die Innenauskleidung beaufschlagt und, vorzugsweise berührend, entlang der Innenauskleidung geführt wird.

Gegenüber dem Stand der Technik wird der Vorteil erreicht, dass mit einfachen Mitteln ein geringer und konstanter Abstand zwischen Elektrode und Innenauskleidung sowie eine verbesserte Signalankopplung erreicht wird.

Es wird ein einfaches, zuverlässiges und bezahlbares Verfahren bereitgestellt, welches auf einem kapazitiven Messverfahren basiert. Das kapazitive Messverfahren benötigt keine eindeutigen Grenzen für eine Reflektion. Es misst die Addition der einzelnen Kapazitäten (Dielektrizitätskonstanten). Wenn sich die Dielektrizitätskonstante in einem Bereich, z.B. Kanalanschlussstutzen, ändert, kann eine signifikante Änderung der Gesamtkapazität registriert werden.

Im Vergleich zum Stand der Technik, z.B. der DE 196 27 312 C1, ist hervorzuheben, dass die "unwichtigen" Kapazitäten, wie Luft Abstand Sensor zur Liner-Innenwand, klein gehalten werden bzw. eliminiert werden.

Vorzugsweise erfolgt die Beaufschlagung mit Kraft durch ein Kraftbeaufschlagungsmittel. Dieses kann in Form einer Federanordnung oder in Form einer von der Transportvorrichtung ausgehenden kraftgesteuerten Positioniereinrichtung ausgebildet sein, wobei in der Positioniereinrichtung Kraftsensoren zur Einstellung der Kraft vorgesehen sein können.

Eine weitere bevorzugte Ausführungsform zeichnet sich dadurch aus, dass der Sensor zumindest einen Sensorkopf aufweist, der entlang der Innenauskleidung derart geführt wird, dass dieser stirnseitig die Innenauskleidung, vorzugsweise federvorgespannt, berührt und/oder dass als Sensorkopf ein solcher verwendet wird, der stirnseitig vorzugsweise halbkugelförmig, kegelstumpfförmig oder zylinderförmig ausgebildet ist.

Als Elektrode kann eine solche verwendet werden, die stirnseitig vorzugsweise halbkugelförmig, kegelstupfförmig oder zylinderförmig ausgebildet ist.

Vorzugsweise werden der Sensorkopf oder die zumindest eine Elektrode mittels der Positioniereinheit unter Verzicht auf eine Abstandsmessung direkt an die Innenauskleidung gedrückt werden, so dass dieser oder diese berührend an der Innenauskleidung anliegt oder anliegen.

Die Elektroden werden vorzugsweise mit einer Auswerteeinheit, wie Messverstärker, derart angesteuert, dass diese das elektrische Feld erzeugen, dessen Feldlinien die Innenauskleidung, die Wandung und/oder den mit Luft oder einem anderen Medium, wie Wasser, gefüllten Raum des Kanalanschlusses durchsetzen.

Bei dem Verfahren ist vorgesehen, dass vor der eigentlichen Messung eine (Basis-)-Gesamtkapazität in der Nähe des Kanalanschlusses gemessen wird und dass die Werte mit den aktuellen Messungen verglichen werden und/oder dass vorzugsweise die durch die Innenverkleidung verdeckte Öffnung durch Detektion einer Änderung des elektrischen Feldes aufgrund einer Änderung eines gemessenen Kapazitätswertes zwischen Kanalwandung und Kanalanschluss erkannt wird.

In dem Kanalrohr gibt es sehr viele, teils unbekannte, Einflussfaktoren, z.B. Linertyp, Feuchtigkeit, Rohrmaterial / Charge, Füllung des Kanalanschlusses, z.B. Luft, Wasser und/oder Abwasser. Deshalb ist der Vergleich wichtig, da z.B. die unbekannte Feuchtigkeit und Rohrmaterial auf kurzer Distanz konstant sein sollten.

Es kann von Vorteil sein, dass der Sensor eine erste Elektrode, eine zweite Elektrode sowie eine dritte Elektrode aufweist, die entlang einer Längsachse nebeneinander in der Sensorhalterung angeordnet sein können, wobei eine erste Messung zwischen der ersten und zweiten Elektrode und eine zweite Messung zwischen der zweiten und dritten Elektrode erfolgt, die als Vergleichsmessung genutzt werden kann.

Zur Verbesserung der Detektion wird eine Längsachse des Sensors in Bezug auf eine Längsachse des Kanals in einem definierten Winkel α eingestellt, der einem Winkel β des von dem Kanal ausgehenden Kanalanschlusses entspricht

Ferner betrifft die Erfindung ein Vorrichtung zur Detektion eines durch eine Innenauskleidung verdeckten Kanalanschlusses eines Kanalrohrs, umfassend eine Transportvorrichtung mit zumindest einem kapazitiven Sensor, der mittels der Transporteinrichtung im Innern des Kanalrohrs entlang der Innenauskleidung geführt wird, wobei der Sensor zumindest eine Elektrode aufweist, von der ein elektrisches Feld ausgeht, welches ausgelegt ist, zumindest die Innenauskleidung und einen Abschnitt der Kanalwandung zu durchsetzen, wobei die Vorrichtung eine Auswerteeinheit aufweist, die ausgebildet ist, das elektrische Feld zu messen und zur Detektion des Kanalanschlusses auszuwerten.

Gemäß der Erfindung ist vorgesehen, dass die zumindest eine Elektrode des kapazitiven Sensors und/oder der kapazitive Sensor während der Messung durch ein Kraftbeaufschlagungsmittel mit Kraft gegen die Innenauskleidung beaufschlagt und berührend entlang der Innenauskleidung geführt ist.

Das Kraftbeaufschlagungsmittel ist vorzugsweise eine Federanordnung, wobei der kapazitive Sensor oder die zumindest eine Elektrode vorzugsweise mittels der Federanordnung, wie Blattfeder oder Spiralfeder, in einer Sensorhalterung gelagert sind. Alternativ kann das Kraftbeaufschlagungsmittel eine von der Transporteinheit ausgehende kraftgesteuerte Positioniereinheit sein.

Damit der kapazitive Sensor oder die Elektrode mit möglichst geringem Reibwiderstand entlang der Innenauskleidung gleitet und/oder die Spitze die Innenseite des gekrümmten Rohrs berührt, ist vorgesehen, dass der kapazitive Sensor einen Sensorkopf aufweist, der stirnseitig vorzugsweise halbkugelförmig, zylinderförmig oder kegelförmig ausgebildet ist und/oder dass die zumindest eine Elektrode stirnseitig vorzugsweise halbkugelförmig, zylinderförmig oder kegelförmig ausgebildet ist.

Vorzugsweise ist der Sensor mit zumindest einer der Elektroden federvorgespannt in der mit der Positioniereinheit gekoppelten Sensorhalterung aufgenommen.

Besonders bevorzugt weist der kapazitive Sensor eine erste und eine zweite Elektrode auf, wobei die erste Elektrode in einem Sensorkopf angeordnet ist, der halbkugelförmig, zylinderförmig oder kegelstumpfförmig ausgebildet ist, und wobei eine zweite Elektrode in Längsrichtung des Sensors hinter der ersten Elektrode angeordnet ist. Alternativ kann die erste Elektrode halbkugelförmig, zylinderförmig oder kegelstumpfförmig ausgebildet sein und den Sensorkopf bilden. Ferner kann die halbkugelförmige, zylinderförmige oder kegelstumpfförmige erste Elektrode dem Verlauf bzw. der Form eines Gehäuses des Sensorkopfs folgen.

Alternativ weist der Sensor eine erste Elektrode und eine zweite Elektrode auf, wobei die erste Elektrode in einem Sensorkopf des Sensors angeordnet ist, und vorzugsweise angrenzend an ein den Sensorkopf begrenzendes Sensorgehäuse verläuft, und wobei die zweite Elektrode entlang einer Längsachse des Sensors in einem definierten Abstand zu der ersten Elektrode angeordnet ist, wobei zwischen den Elektroden eine Isolierung vorgesehen ist.

Weitere Einzelheiten, Vorteile und Merkmale der Erfindung ergeben sich nicht nur aus den Ansprüchen, den diese zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine schematische Darstellung einer Vorrichtung zur Detektion eines Kanalanschlusses in einer Wandung eines Kanalrohrs in einer ersten Arbeitsstellung,
- Fig. 2: die Vorrichtung gemäß Fig. 1 in einer zweiten Arbeitsstellung,
- Fig. 3: eine erste Ausführungsform einer Halterung für einen Sensor,
- Fig. 4: eine zweite Ausführungsform einer Halterung für einen Sensor,
- Fig. 5: eine erste Ausführungsform eines kapazitiven Sensors,
- Fig. 6: eine zweite Ausführungsform eines kapazitiven Sensors,
- Fig. 7: eine dritte Ausführungsform eines kapazitiven Sensors,
- Fig. 8: eine vierte Ausführungsform eines kapazitiven Sensors und
- Fig. 9: eine fünfte Ausführungsform eines kapazitiven Sensors.

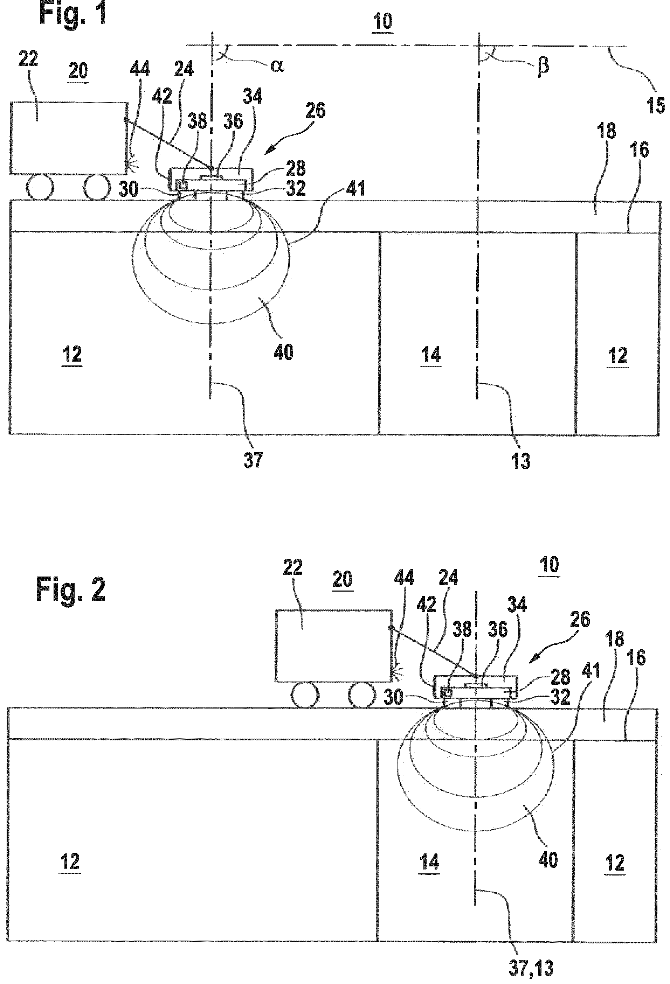

Die Fig. 1 und 2 zeigen rein schematisch eine Seitenansicht eines Abschnitts eines Kanalrohrs 10 mit einer Wandung 12, in der eine Öffnung 14, wie Anschluss in Form eines Kanalanschlusses, ausgebildet ist. Eine Längsachse 13 des Kanalanschlusses 14 erstreckt sich in einem Winkel β in Bezug zu einer Längsachse 15 des Kanalrohrs 10. Eine Innenfläche 16 der Wandung 12 ist mit einer Innenauskleidung 18 ausgekleidet, der z. B. bei einer Sanierung des Kanalrohrs 10 in dieses eingebracht wurde. Die Innenauskleidung 18 kleidet den Kanal im Innern komplett aus, so dass nach dem Einbringen der Innenauskleidung 18 sämtliche in den Kanal mündende Anschlüsse 14 abgedeckt sind. Zur weiteren Bearbeitung müssen die Anschlüsse 14 genau lokalisiert und wieder geöffnet werden.

Zur Detektion des durch die Innenauskleidung 18 verdeckten Anschlusses 14 ist im Innern des Kanalrohrs 10 eine Vorrichtung 20 angeordnet. Allgemein umfasst die Vorrichtung 20 eine Transportvorrichtung 22, die in Längsrichtung des Kanalrohrs 10 verfahrbar ist. Als Transportvorrichtung kann eine separate und/oder die Transportvorrichtung verwendet werden, auf der das Werkzeug zum Öffnen des Anschlusses verbaut ist. Von der Transportvorrichtung 22 geht eine Positioniereinheit 24 aus, an deren Ende eine Sensoranordnung 26 angeordnet ist. Die Sensoranordnung 26 umfasst einen Sensor 28 in Form eines kapazitiven Sensors mit einer ersten Elektrode 30 und einer zweiten Elektrode 32 und eine Sensorhalterung 34. Der Sensor 28 mit den Elektroden 30, 32 ist in der Sensorhalterung 34 aufgenommen, die mit der Positioniereinheit 24 verbunden ist.

Gemäß der Erfindung ist vorgesehen, dass die Sensoranordnung 26 mittels der Positioniereinheit 24 derart im Bereich der Innenauskleidung 18 positioniert wird, dass der Sensor 28 und/oder zumindest eine der Elektroden 32, 34 durch ein Kraftbeaufschlagungsmittel 36 mit Kraft gegen die Innenauskleidung 18 beaufschlagt und in Berührungskontakt mit dieser durch die Transporteinrichtung entlang der Innenauskleidung 18 geführt wird.

Die Elektroden 30, 32 des kapazitiven Sensors 28 sind zumindest im Bereich ihrer Kontaktfläche mit der Innenauskleidung isoliert, so dass die Elektroden 30, 32 in nichtleitendem Berührungskontakt mit der Innenauskleidung 18 entlang dieser geführt werden.

Das Kraftbeaufschlagungsmittel 36 ist vorzugsweise ein Federelement, so dass der Sensor 28 mit zumindest einer der Elektroden 30, 32 federvorgespannt in der mit der Positioniereinheit 24 gekoppelten Sensorhalterung 34 aufgenommen ist. Dadurch ist gewährleistet, dass die zumindest eine Elektrode 30 mittels der Positioniereinheit 24 ohne genaue Abstandsmessung direkt an die Innenauskleidung 18 gedrückt und Bewegungen bzw. Vibrationen ausgeglichen werden können.

Durch die erfindungsgemäße Ausführung liegt die zumindest eine Elektrode so nah wie möglich, insbesondere berührend an der Innenauskleidung 14 an, wodurch einerseits ein geringer Abstand und andererseits ein konstanter Abstand erreicht wird mit der Folge, dass die Signalauswertung verbessert wird. Im Vergleich zum Stand der Technik wird einerseits eine verbesserte Signalankopplung und andererseits eine konstruktiv einfache Positionierung erreicht, da weder ein Ultraschallsensor zur Abstandsmessung noch ein Stellmotor zur genauen Positionierung erforderlich sind.

Die Positioniereinheit 24 ist derart ausgebildet, dass diese die Sensorhalterung 34 derart ausrichten kann, dass eine Neigung einer Längsachse 37 des Sensors 28 in Bezug auf die Längsachse 15 des Kanals 10 in einem bestimmten, wiederholbaren, d. h. einstellbaren Winkel α, der dem Winkel β des Kanalanschlusses 14 entspricht, in einem fest definierten Abstand zur Innenauskleidung 18, z. B. direkt aufgesetzt, geführt werden kann.

Auch besteht die Möglichkeit die Positioniereinrichtung 24 als Kraftbeaufschlagungsmittel derart auszubilden, dass diese den Sensor 28 bzw. zumindest eine der Elektroroden 30, 32 mit einer definierten Kraft gegen die Innenauskleidung 18 beaufschlagt, sodass zumindest eine der Elektroden 30, 32 kraftbeaufschlagt gegen diese anliegt. Dazu können in der Positioniereinheit 24 Kraftsensoren vorgesehen sein, um die erforderliche Andruckkraft für die Elektroden an die Innenauskleidung 18 zu bestimmen.

Die Elektroden 30, 32 des kapazitiven Sensors 28 sind mit einer Auswerteeinheit 38, wie Messverstärker, verbunden, die ausgebildet ist die Elektroden derart anzusteuern, dass diese ein elektrisches Feld 40 erzeugen, dessen Feldlinien 41die Innenauskleidung 18, die Wandung 12 und/oder den mit Luft oder einem anderen Medium, wie Wasser, gefüllten Raum des Anschlusses 14 durchsetzen.

Da die Materialien der Innenauskleidung 18, der Wandung 12 und des Anschluss 14 unterschiedlich sind und somit verschiedene Dielektrizitätskonstanten aufweisen, verändert sich das elektrische Feld 40 entsprechend der Position der Sensoranordnung 26 in Längsrichtung, wenn die Sensoranordnung 26 in Längsrichtung des Kanals 10 verfahren wird.

Wenn sich das Dielektrikum im Bereich der Feldlinien 41 nicht ändert, also wenn die Feldlinien 41, wie in Fig. 1 dargestellt, durch die Innenauskleidung 18 und die Wandung 12 verlaufen, so gibt die Auswerteeinheit 38 das gleiche Signal aus. Kommt der kapazitive Sensor jedoch in den Bereich des Anschlusses 14, wie in Fig. 2 dargestellt, in dem anstelle der Kanalwandung 12 aus z. B. Beton ein mit Luft gefüllter Hohlraum vorhanden ist, so ändert sich in diesem Bereich das Dielektrikum. Das elektrische Feld 40 erfährt eine Störung bzw. Änderung, die von der Auswerteelektronik erkannt und verarbeitet wird. Auf diese Weise kann berührungslos festgestellt werden, ob hinter der Innenauskleidung 18 ein Kanalanschluss 14 oder die Kanalwand 12 liegt.

Das von der Auswerteelektronik 38 bei einer Änderung des elektrischen Feldes 40 ausgegebene Signal kann auf einer Anzeigeeinheit 42 der Sensoranordnung 26 unmittelbar in dem Kanal 10 angezeigt und über eine Kamera 44 der Transportvorrichtung 22 erfasst werden. Alternativ besteht auch die Möglichkeit, dass das von der Auswerteelektronik 38 erzeugte Signal an eine außerhalb des Kanals angeordnete Rechnereinheit drahtlos oder leitungsgebunden zu übertragen.

Da die Kapazität der Innenauskleidung 18 grundsätzlich bekannt ist, kann diese in der Auswerteeinheit 38 hinterlegt werden und jeweils von der gemessenen gesamten Koppelkapazität abgezogen werden. Um weitere Umgebungs- und Störfaktoren zu eliminieren, ist es von Vorteil, das System zunächst an einer Stelle in dem Kanal 10 zu kalibrieren, an der sich die Kanalwandung 12 sicher hinter der Innenauskleidung 18 befindet. In diesem Zusammenhang ist anzumerken, dass der Anschluss 14 nicht durch eine Messung des absoluten Wertes der Kapazität, sondern durch Detektion einer Änderung des elektrischen Feldes 40 aufgrund einer Änderung des Kapazitätswertes durch den Unterschied zwischen Kanalwandung und Kanalanschluss erkannt wird.

Die Auswerteeinheit 38 ist derart ausgebildet, dass Materialien wie z.B. trockener Beton, nasser Beton, trockenes Steinzeug, nasses Steinzeug, Luft, z. B. bei leerem Kanalanschluss, Wasser, z. B. bei gefülltem Kanalanschluss und/oder Wassergemisch mit Verunreinigungen unterschieden werden können. Um zuvor genannte Materialien besser unterscheiden zu können, können Kapazitätsmessungen mit unterschiedlichen Frequenzen und Elektrodenanordnungen durchgeführt werden.

Bei einer Kalibration wird zunächst die Kapazität bzw. ein proportionales Signal des ursprünglichen Kanalrohrs 10 ermittelt. Dazu wird eine Messung an einem Ort in dem Kanal 10 durchgeführt, an dem sich sicher die Kanalwandung 12 hinter der Innenauskleidung 18 befindet. Von Vorteil ist, wenn die Messung über einen Zeitraum von z. B. 10 Sekunden während der Fahrt ausgeführt wird, um eine typische Kapazität in einer größeren Umgebung zu erfassen. Dadurch wird vermieden, dass Unregelmäßigkeiten z. B. in der Zusammensetzung der Kanalrohrwand 12, eine Fehlinterpretation auslösen, wenn nur genau an einer Stelle kalibriert werden würde.

Bevor die Sensoranordnung 34 auf die Innenauskleidung 18 aufgesetzt wird, wird üblicherweise ein bestimmter Kapazitätsbereich gemessen. Bei der Bewegung der Sensoranordnung 34 in Längsrichtung der Innenauskleidung 18 ändern sich der Messwert. Diese Änderung wird zum Start der Kalibration als Trigger verwendet. Die Kalibration läuft wir folgt ab, wobei Zeiten rein beispielhaft sind:
- Messwert ändert sich
- System wartet eine vorgegebene Zeit, z. B. 5 Sekunden, um der Positioniereinrichtung 24 Zeit zu geben, die Sensoranordnung 28 zu positionieren
- System beginnt eine Kalibration über eine vorgegebene Zeit, z. B. 10 Sekunden. In dieser Zeit sollte die Sensoranordnung 26 entlang der Innenauskleidung 18 gefahren werden
- Wenn die Kalibration erfolgreich war, wird dies dem Nutzer angezeigt und die Messungen zur Lokalisierung können starten.

Das System mit integrierter Logik kann dann selbstständig entscheiden, ob die korrekte Position zum Fräsen erreicht ist.

Betreffend den Ablauf der Messung und die Suche des Kanalanschlusses 14 ist anzumerken, dass eine Winkelposition (Winkel β) des Kanalanschlusses, z. B. eines Kanaleinlaufs, vor dem Einziehen der Innenauskleidung 18 durch eine Messung, beispielsweise eine Gyro-Messung, bestimmt, gespeichert und wieder gefunden werden kann. Somit muss lediglich die Position in Längsrichtung des Kanals 10, d. h. in Richtung des Verfahrwegs detektiert werden. Die gemessene Winkelposition wird gewählt und die Sensoranordnung 26 wird in Position (Winkel α) gebracht und kalibriert. Anschließend fährt die Transportvorrichtung 22 im Kanalrohr 10 vorwärts bzw. rückwärts wobei die gespeicherte Winkelposition des Sensors 28 beibehalten bleibt. Auch kann die Winkelposition mittels der Positioniereinrichtung 24 entsprechend nachjustiert werden. Die Sensoranordnung 26 erfasst die Messwerte des elektrischen Feldes 40 und verarbeitet diese. Ergibt die Auswertung, dass sich das elektrische Feld 40 ändert, also die Sensoranordnung 26 an einer Position eines Kanalanschlusses 14 ist, wird in diese Feldänderung durch ein Signal angezeigt.

Wie zuvor beschrieben, kann das Signal, welches eine Änderung des Messwertes anzeigt, unmittelbar im Kanalrohr 10 angezeigt werden, beispielsweise mittels der Anzeigeeinheit 42, wie LED oder Display, an der Sensoranordnung 26, die mit der Roboterkamera 44 erfasst und an den Benutzer weitergegeben werden kann. Alternativ kann die Ausgabe der Messwerte in einer Steuerelektronik der Transportvorrichtung 22 integriert sein oder mit separatem Kabel (nicht dargestellt) an eine außerhalb des Kanals an der Oberfläche befindliche Zentrale geführt werden und somit auf einem separaten Display angezeigt werden.

Die Transportvorrichtung 22 kann als Kanal-Fräsroboter ausgebildet sein, wobei an der Positioniereinheit 24 zusätzlich zu der Sensoranordnung 26 eine Fräseinrichtung (nicht dargestellt) montiert ist. Somit kann die Innenauskleidung 14 unmittelbar nach der Detektion des Anschlusses 14 an der detektieren Position aufgefräst werden.

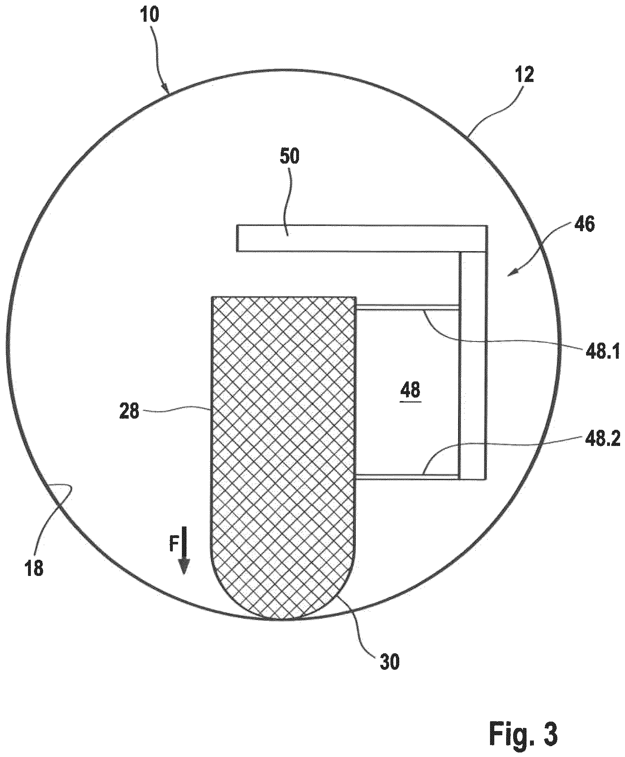

Fig. 3 zeigt rein schematisch eine Seitenansicht einer ersten Ausführung einer Sensorhalterung 46, wobei der Sensor 28 mit der zumindest einen Elektrode 30, 32 über eine Federanordnung 48 mit den Federelementen 48.1, 48.2 mit der Sensorhalterung 46 gekoppelt ist, sodass die zumindest eine Elektrode 30, 32 mit einer Kraft gegen die Innenauskleidung 18 der Kanalwandung 12 federvorgespannt anliegt. In dem dargestellten Ausführungsbeispiel sind die Federelemente 48.1, 48.2 als Blattfederelemente in Form einer Geradführung ausgebildet. Zur Kopplung mit der Positioniereinheit 24 ist ein Flansch 50 vorgesehen, der von der Sensorhalterung 46 ausgeht.

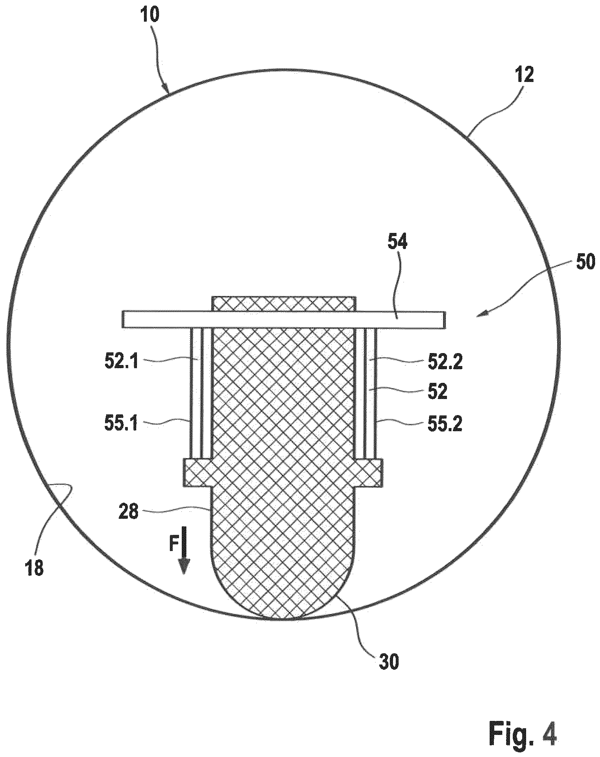

Fig. 4 zeigt rein schematisch eine Seitenansicht einer zweiten Ausführung einer Sensorhalterung 50, wobei der Sensor 28 mit der zumindest einen Elektrode 30, 32 über eine Federanordnung 52 mit den Federelementen 52.1, 52.2 mit der Sensorhalterung 50 gekoppelt ist, sodass diese mit einer Kraft gegen die Innenauskleidung 18 der Kanalwandung 12 federvorgespannt anliegt. In dem dargestellten Ausfiihrungsbeispiel sind die Federelemente 52.1, 52.2 als Spiralfedern ausgebildet. Zur Kopplung mit der Positioniereinheit 24 weist die Sensorhalterung 50 einen Flansch 54 auf, von dem Führungselemente 55.1, 55.2 ausgehen, durch die der Sensor 28 und die Spiralfedern 52.1, 52.2 geführt werden.

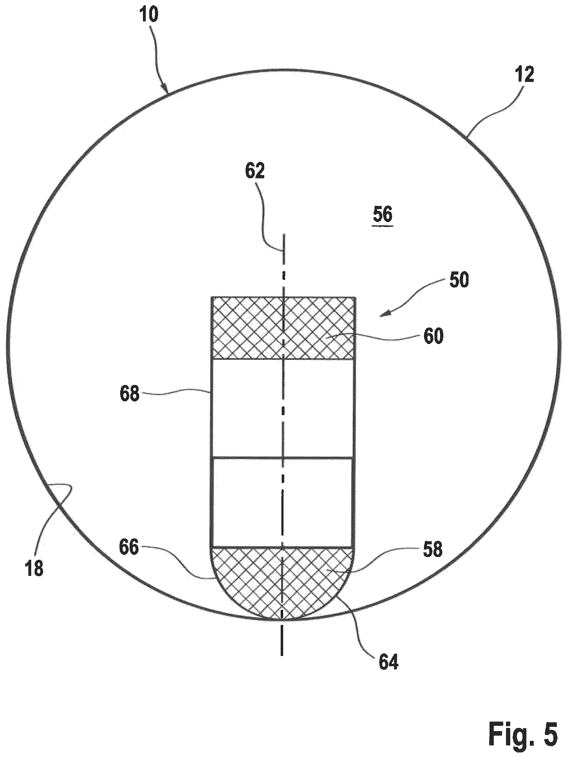

Fig. 5 zeigt eine zweite Ausführungsform eines Sensors 56, umfassend zwei Elektroden 58, 60, die entlang einer Längsachse 62 des Sensors 56 in einem Sensorgehäuse 66 angeordnet sind. Dabei ist die Elektrode 58 in einem elektrisch isolierenden Sensorkopf 64 angeordnet, der vorzugsweise halbkugelförmig ausgebildet ist. Vorzugsweise ist die Elektrode 58 ebenfalls halbkugelförmig ausgebildet und verläuft angrenzend an das den Sensorkopf 64 begrenzende Sensorgehäuse 66.

Zur Bildung eines kapazitiven Sensors ist die zweite Elektrode 60 in einem definierten Abstand zu der ersten Elektrode 58 angeordnet, wobei zwischen der ersten Elektrode 58 und der zweiten Elektrode 60 eine Isolierung 68 vorgesehen ist. In dem Sensor 56 kann die Auswerteelektronik 38 angeordnet sein. Erfindungsgemäß ist der Sensor 56 derart geführt, dass dieser mit seinem elektrisch isolierenden Sensorkopf 64 entlang der Innenauskleidung 18 derart geführt ist, dass der Sensorkopf 64 stirnseitig die Innenauskleidung 18 federvorgespannt berührt. Die Elektrode 66 hat folglich einen definiert konstanten Abstand zu der Innenverkleidung 18.

Der Sensor 56 kann in einer der beschriebenen Sensorhalterungen 34, 50, 54 gemäß Fig. 1 bis Fig. 4 aufgenommen sein.

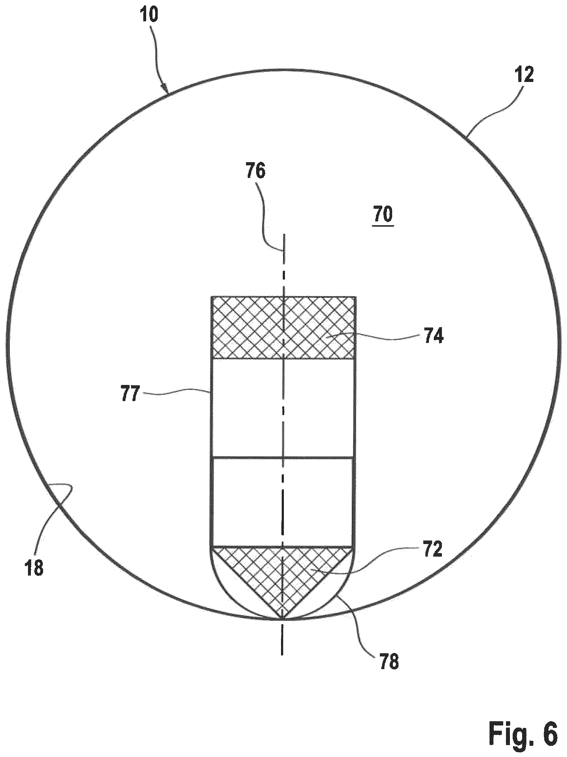

Fig. 6 zeigt eine dritte Ausführung eines Sensors 70 mit einer ersten Elektrode 72 und einer zweiten Elektrode 74 in einem Sensorgehäuse 77 hintereinander angeordnet sind. Im dargestellten Ausführungsbeispiel ist die Elektrode 72 kegelstumpfförmig ausgebildet und ist in einem elektrisch isolierenden Sensorkopf 78 des Sensorgehäuses 77 angeordnet, dessen Außenwandung halbkugelförmig ausgebildet ist.

Der Sensor 70 kann in einer der beschriebenen Sensorhalterungen 34, 50, 54 angeordnet sein.

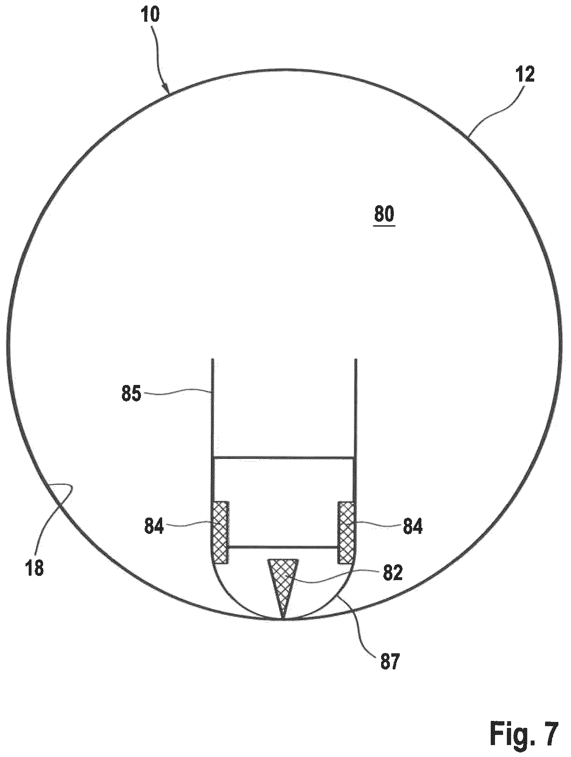

Fig. 7 zeigt eine vierte Ausführungsform eines Sensors 80 mit einer ersten Elektrode 82 und einer zweiten Elektrode 84, wobei die erste Elektrode 82 kegelstumpfförmig ausgebildet und die zweite Elektrode 84 als ein umlaufender Ring oder in Form von zwei seitlichen Stabelektroden ausgebildet ist. Die Elektroden 82, 84 sind in einem Sensorgehäuse 85 angeordnet, wobei die Elektrode 82 von einem halbkugelförmigen isolierenden Sensorkopf 87 umschlossen ist. Der Sensor 80 kann in einer der Sensorhalterungen 34, 50 oder 54 angeordnet sein.

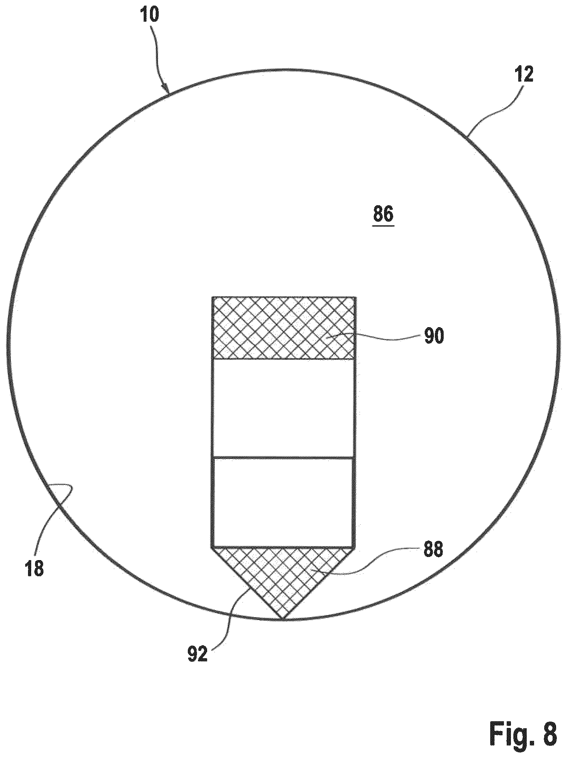

Fig. 8 zeigt eine fünfte Ausführungsform eines Sensors 86, mit einer ersten Elektrode 88 und einer zweiten Elektrode 90, die im Wesentlichen der Ausführungsform gemäß Fig. 6 entsprechen. Allerdings ist die erste Elektrode 88 nicht von einem Gehäuse umgeben, so dass die Elektrode 88 mit ihrer isolierten Spitze 92 direkt mit der Innenauskleidung 18 in Kontakt ist.

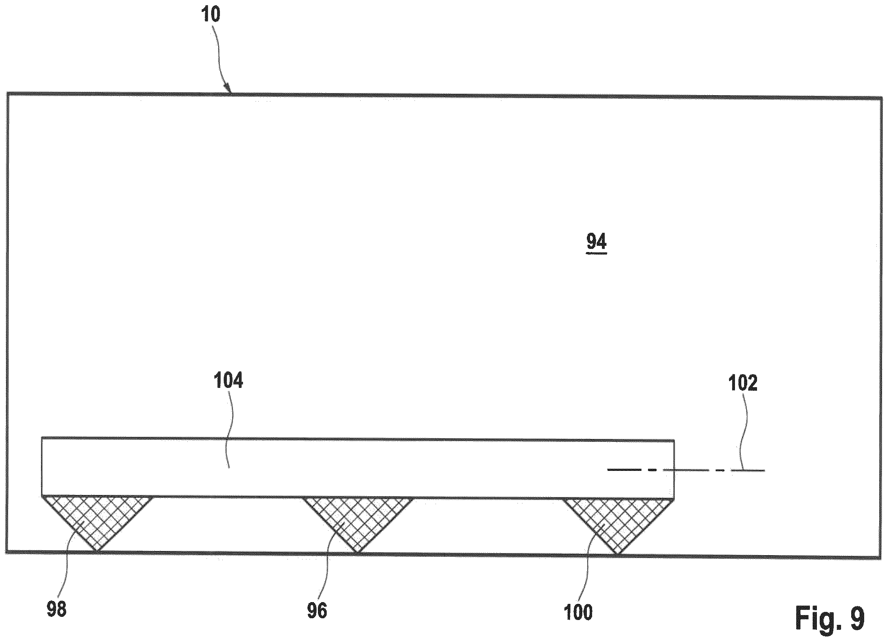

Fig. 9 zeigt eine sechste Ausführungsform eines Sensors 94 mit einer ersten Elektrode 96, einer zweiten Elektrode 98 sowie optional einer dritten Elektrode 100, die entlang einer Längsachse 102 nebeneinander in einer Sensorhalterung 104 angeordnet sind. Die Elektroden 96, 98, 100 sind im Ausführungsbeispiel kegelstumpfförmig ausgebildet, können jedoch auch wie in Fig. 3 oder 4 dargestellt, halbkugelförmig oder zylinderförmig ausgebildet sein. Die Elektroden 96, 98, 100 sind mit der Elektrodenhalterung 104 verbunden. Die Elektrodenhalterung 104 kann mit einer der Sensorhalterungen 43. 50, 54 gekoppelt sein. Die Elektroden können auch separat federgelagert sein

Bei der Ausführungsform gemäß Fig. 9 erfolgt die Messung zwischen den Elektroden 96 und 98. Eine Messung zwischen den Elektroden 96 und 100 und/oder 98 und 100 kann als Vergleichsmessung genutzt werden.

Gemäß einer nicht dargestellten Ausführungsform kann der Sensor selbst nur die erste Elektrode aufweisen, wobei die zweite Elektrode durch die Masse, d.h. Erdpotential, gebildet wird. Dabei wird eine Kapazität bzw. Änderung der Kapazität zwischen der ersten Elektrode des Sensors und der Masse bzw. Erdpotential gemessen.

## Patentansprüche

1. Verfahren zur Detektion eines durch eine Innenauskleidung (18) verdeckten Kanalanschlusses (14) eines Kanalrohrs (10), wobei ein kapazitiver Sensor (28, 56, 70, 80, 86, 94) mittels einer Transportvorrichtung (22) im Innern des Kanalrohrs (10) entlang der Innenauskleidung (18) geführt wird, wobei der kapazitive Sensor (28, 56, 70, 80, 86, 94) zumindest eine Elektrode (30, 32, 58, 60, 72, 74,82, 84, 88, 90, 96, 98, 100) aufweist, von der ein elektrisches Feld (38) ausgeht, welches ausgelegt ist, zumindest die Innenauskleidung (18) und einen Abschnitt der Kanalwandung (12) zu durchsetzen, wobei das elektrische Feld (40) gemessen und zur Detektion des Kanalanschlusses (14) mit einer Auswerteeinheit (38) ausgewertet wird,
**dadurch gekennzeichnet,**
**dass** die zumindest eine Elektrode (30, 32, 58, 60, 72, 74,82, 84, 88, 90, 96, 98, 100) des kapazitiven Sensors und/oder der kapazitive Sensor (28, 56, 70, 80, 86, 94) während der Messung mit Kraft gegen die Innenauskleidung (18) beaufschlagt und berührend entlang der Innenauskleidung (18) geführt wird.

2. Verfahren nach Anspruch 1,
**dadurch gekennzeichnet,**
**dass** die Beaufschlagung mit Kraft durch ein Kraftbeaufschlagungsmittel in Form einer Federanordnung (48, 52) erfolgt.

3. Verfahren nach Anspruch 1 oder 2,
**dadurch gekennzeichnet,**
**dass** die Beaufschlagung mit Kraft durch ein Kraftbeaufschlagungsmittel in Form einer von der Transportvorrichtung (22) ausgehenden Positioniereinrichtung (24) erfolgt.

4. Verfahren nach zumindest einem der vorhergehenden Ansprüche,
**dadurch gekennzeichnet,**
**dass** der Sensor (28, 56, 70, 80, 86, 94) zumindest einen Sensorkopf (64) aufweist, der entlang der Innenauskleidung (18) derart geführt wird, dass dieser stirnseitig die Innenauskleidung (18), vorzugsweise federvorgespannt, berührt und/oder dass als Sensorkopf (64) ein solcher verwendet wird, der stirnseitig vorzugsweise halbkugelförmig, kegelstumpfförmig oder zylinderförmig ausgebildet ist.

5. Verfahren nach zumindest einem der vorhergehenden Ansprüche,
**dadurch gekennzeichnet,**
**dass** als Elektrode (30, 32, 58, 60, 72, 74,82, 84, 88, 90, 96, 98, 100) eine solche verwendet wird, die stirnseitig vorzugsweise halbkugelförmig, kegelstupfförmig oder zylinderförmig ausgebildet ist.

6. Verfahren nach zumindest einem der vorhergehenden Ansprüche,
**dadurch gekennzeichnet,**
**dass** der Sensorkopf (64) oder die zumindest eine Elektrode (30, 32, 58, 60, 72, 74,82, 84, 88, 90, 96, 98, 100) mittels der Positioniereinheit (24) unter Verzicht auf eine Abstandsmessung direkt an die Innenauskleidung (18) gedrückt werden, so dass dieser oder diese berührend an der Innenauskleidung (14) anliegen.

7. Verfahren nach zumindest einem der vorhergehenden Ansprüche,
**dadurch gekennzeichnet,**
**dass** die Elektroden (30, 32, 58, 60, 72, 74,82, 84, 88, 90, 96, 98, 100) mit einer Auswerteeinheit (38), wie Messverstärker, derart angesteuert werden, dass diese das elektrische Feld (40) erzeugen, dessen Feldlinien (41) die Innenauskleidung (18), die Wandung (12) und/oder den mit Luft oder einem anderen Medium, wie Wasser, gefüllten Raum des Kanalanschlusses (14) durchsetzen.

8. Verfahren nach zumindest einem der vorhergehenden Ansprüche,
**dadurch gekennzeichnet,**
**dass** vor der eigentlichen Messung eine (Basis-)-Gesamtkapazität in der Nähe des Kanalanschlusses gemessen wird und dass die Werte mit den aktuellen Messungen verglichen werden und/oder dass die durch die Innenverkleidung (18) verdeckte Öffnung (14) durch Detektion einer Änderung des elektrischen Feldes (40) aufgrund einer Änderung eines gemessenen Kapazitätswertes zwischen Kanalwandung (12) und Kanalanschluss (14) erkannt wird.

9. Verfahren nach zumindest einem der vorhergehenden Ansprüche,
**dadurch gekennzeichnet,**
**dass** der Sensor (94) eine erste Elektrode (96), eine zweite Elektrode (98) sowie eine dritte Elektrode (100) aufweist, die entlang einer Längsachse (102) nebeneinander in der Sensorhalterung (104) angeordnet sind, wobei die eine erste Messung zwischen den Elektroden (96, 98) und eine zweite Messung zwischen den Elektroden 96 und 100 und/oder 98 und 100 erfolgt, die als Vergleichsmessung genutzt werden kann.

10. Verfahren nach zumindest einem der vorhergehenden Ansprüche,
**dadurch gekennzeichnet,**
**dass** eine Längsachse des Sensors (28, 56, 70, 80, 86, 94) in Bezug auf eine Längsachse des Kanals (10) in einem definierten Winkel α eingestellt wird, der einem Winkel β eines von dem Kanal (10) ausgehenden Kanalanschlusses (14) entspricht

11. Vorrichtung zur Detektion eines durch eine Innenauskleidung (18) verdeckten Kanalanschlusses (14) eines Kanalrohrs (10), umfassend eine Transportvorrichtung (22) mit zumindest einem kapazitiven Sensor (28, 56, 70, 80, 86, 94), der mittels der Transporteinrichtung (22) im Innern des Kanalrohrs (10) entlang der Innenauskleidung (18) geführt wird, wobei der kapazitive Sensor (28, 56, 70, 80, 86, 94) zumindest eine Elektrode (30, 32, 58, 60, 72, 74,82, 84, 88, 90, 96, 98, 100) aufweist, von der ein elektrisches Feld (40) ausgeht, welches ausgelegt ist, zumindest die Innenauskleidung (18) und einen Abschnitt der Kanalwandung (12) zu durchsetzen, wobei die Vorrichtung eine Auswerteeinheit (38) aufweist, die ausgebildet ist, das elektrische Feld (40) zu messen und zur Detektion des Kanalanschlusses (14) auszuwerten,
**dadurch gekennzeichnet,**
**dass** die zumindest eine Elektrode (30, 32, 58, 60, 72, 74,82, 84, 88, 90, 96, 98, 100) des kapazitiven Sensors (28, 56, 70, 80, 86, 94) und/oder der Sensor (28, 56, 70, 80, 86, 94) während der Messung durch ein Kraftbeaufschlagungsmittel (24; 48, 52) mit Kraft gegen die Innenauskleidung (18) beaufschlagt und berührend entlang der Innenauskleidung (18) geführt ist.

12. Vorrichtung nach Anspruch 11,
**dadurch gekennzeichnet,**
**dass** das Kraftbeaufschlagungsmittel (48, 52) eine Federanordnung (48, 52) ist, wobei der Sensor (28, 56, 70, 80, 86, 94) oder die zumindest eine Elektrode (30, 32, 58, 60, 72, 74,82, 84, 88, 90, 96, 98, 100) mittels einer Federanordnung (48, 52) in einer Sensorhalterung (34, 50, 54) gelagert sind und/oder dass das Kraftbeaufschlagungsmittel (24) eine kraftgesteuerte Positioniereinrichtung (24) ist.

13. Vorrichtung nach Anspruch 11 oder 12,
**dadurch gekennzeichnet,**
**dass** der Sensor (28, 56, 70, 80, 86, 94) zumindest einen Sensorkopf aufweist, der stirnseitig vorzugsweise halbkugelförmig, zylinderförmig oder kegelförmig ausgebildet ist und/oder dass die zumindest eine Elektrode (30, 32, 58, 60, 72, 74,82, 84, 88, 90, 96, 98, 100) stirnseitig vorzugsweise halbkugelförmig, zylinderförmig oder kegelförmig ausgebildet ist.

14. Vorrichtung nach zumindest einem der Ansprüche 11 bis 13,
**dadurch gekennzeichnet,**
**dass** der Sensor (28, 56, 70, 80, 86, 94) mit zumindest einer der Elektroden (30, 32, 58, 60, 72, 74,82, 84, 88, 90, 96, 98, 100) federvorgespannt in der mit der Positioniereinheit (24) gekoppelten Sensorhalterung (34) aufgenommen ist.

15. Vorrichtung nach zumindest einem der Ansprüche 11 bis 13,
**dadurch gekennzeichnet,**
**dass** der kapazitive Sensor (28, 56, 70, 80, 86, 94) einen Sensorkopf mit zumindest einer Elektrode aufweist, die vorzugsweise halbkugelförmig, zylinderförmig oder kegelstumpfförmig ausgebildet ist und/oder dass die vorzugsweise halbkugelförmige, zylinderförmige oder kegelstumpfförmige Elektrode an einem vorderen Sensorkopf angeordnet ist und/oder dass die vorzugsweise halbkugelförmige, zylinderförmige oder kegelstumpfförmige Elektrode dem Verlauf bzw. der Form eines Gehäuses des Sensorkopfs folgt und/oder vorzugsweise dass der Sensor (56) eine erste Elektrode (58) und eine zweite Elektrode (60) aufweist, wobei die erste Elektrode (58) in einem Sensorkopf (64) des Sensors (56) angeordnet ist, und vorzugsweise angrenzend an ein den Sensorkopf (64) begrenzendes Sensorgehäuse (66) verläuft, und wobei die zweite Elektrode (60) entlang einer Längsachse (62) des Sensors (56) in einem definierten Abstand zu der ersten Elektrode (60) angeordnet ist, wobei zwischen den Elektroden (58, 60) eine Isolierung (68) vorgesehen ist.
